Europäisches Patentamt

European Patent Office

Office européen des brevets

(11) Publication number: **0 146 997**
**A1**

(12) **EUROPEAN PATENT APPLICATION**

(21) Application number: **84300007.6**

(22) Date of filing: **03.01.84**

(51) Int. Cl.⁴: **F 16 L 55/24**

(43) Date of publication of application:
**03.07.85 Bulletin 85/27**

(84) Designated Contracting States:
**AT BE CH DE FR GB IT LI LU NL SE**

(71) Applicant: **Guest, John Derek**
**"Iona" Cannon Hill Way Bray**
**Maidenhead Berkshire(GB)**

(72) Inventor: **Guest, John Derek**
**"Iona" Cannon Hill Way Bray**
**Maidenhead Berkshire(GB)**

(74) Representative: **Bayliss, Geoffrey Cyril et al,**
**BOULT, WADE & TENNANT 27 Furnival Street**
**London EC4A 1PQ(GB)**

(54) **Improvements in or relating to tube couplings.**

(57) The disclosure relates to a tube coupling for gripping a tube comprising a body (10) having a bore (13) to receive a tube from one end of the bore and a releasable collet form locking device (12) in the bore to lock the tube in the bore to receive the tube inserted into the bore from one end (29) of the body to prevent withdrawal of the tube and a filter element (35, 36) extending across the bore at a location spaced from the locking device to filter a medium flowing in the bore.

FIG. 1.

EP 0 146 997 A1

# 0146997

## "IMPROVEMENTS IN OR RELATING TO TUBE COUPLINGS"

This invention relates to tube couplings and is concerned with a tube coupling of the kind having a body member containing a releasable locking device for gripping a tube.  U.K. Patent Specification Nos:1520742, 1573757, 2051280, 2052662 and U.K. Application Nos: 8235475 and 8235422 describe and illustrate examples of such tube couplings.

This invention provides a tube coupling for gripping a tube comprising a body member with a bore to receive a tube and a releasable locking device in the bore to permit a tube to be inserted into the bore in one direction from one end of the body and to prevent withdrawal of the tube in the opposite direction until released and a filter element disposed in the bore spaced from the locking device to filter a medium flowing in the bore.

The term "filter element" as used throughout this specification is intended to include any form of filter or strainer whether coarse or fine.

In one embodiment according to the invention, the filter comprises a wall extending across the bone having a passage or passageways through the wall for flow of medium through the bore, the bore being a separate element from the body member or being formed integrally with the body member.

In a further embodiment according to the invention the filter element is cup-shaped, the rim of the cup being mounted around the bore in the body member and the base of the cup extending across the bore.

The cup shaped filter element may be formed from a sintered metal, a porous plastics, an apertured plastics moulding, wire mesh or a spring or other like suitable constructions.

In a still further embodiment according to the invention, the filter element may comprise a spiral spring extending along the bore in the body member, the larger diameter of the spring engaging the bore of the body member to support the spring in the body member.

The following is a description of a number of embodiments of the invention, reference being made to the accompanying drawings in which:

Figure 1 is a longitudinal section through a tube coupling with a filter;

Figures 2 to 5 are sections through further coupling arrangements; and

Figure 5a shows a modification to a component of the arrangement shown in Figure 5.

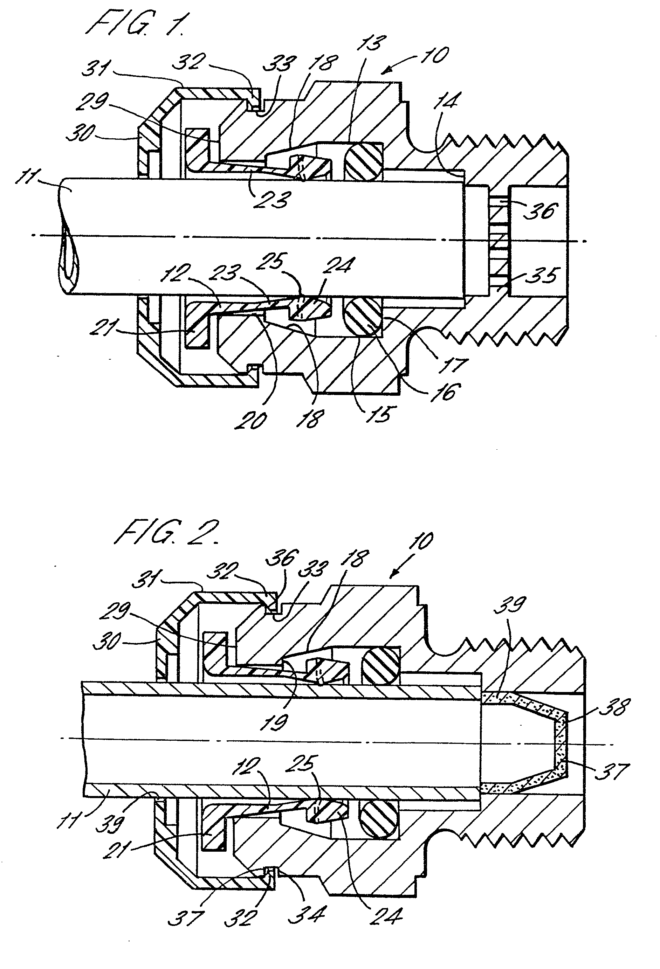

Referring firstly to Figure 1 of the drawings there is shown a coupling body 10 for effecting a coupling to a tube 11 using a collet 12. A bore 13 extends through the coupling body and has a shoulder 14 forming an end stop for the tube 11 when inserted in the coupling. An enlarged diameter portion 15 of the bore contains

0146997

an O-ring or other similar seal 16 which abuts against a shoulder 17 in the coupling body and which, in use, seals against the external surface of the tube 11 and against the internal wall surface of the bore in the coupling.

The enlarged diameter portion 15, towards the end from which the tube 11 is inserted, has a tapered portion 18 tapering to a narrow diameter in the axially outward direction, this taper being terminated by an inwardly facing shoulder 19 between the tapered portion 18 and the narrow diameter portion 20. Within this part of the coupling body is the collet 12 which is formed with a ring portion 21 lying outside the coupling body which ring portion is formed integrally with a plurality of collet arms, typically four arms 23, formed of resilient material and extending in the axial direction. These arms, in section, are of generally arcuate shape to embrace the tube 11.

Towards their axially inner ends, these collet arms are formed with a head portion 24 having a tooth element 25 extending radially inwardly to abut against and bite into the tube to be gripped. Conveniently the collet is formed of a plastics material with the tooth element constituted by a metal insert embedded in the plastics material of the collet.

The head portions 24 on the ends of the collet arms 23 are forced slightly outwardly against the resilience of the arms when a tube is inserted in the coupling body. These arms will thus engage against the tapered portion of the bore in the wall coupling body when a tube is inserted into the collet and, if the collet is then moved axially outwardly, that is to say to the left in Figure 1, this engagement with the tapered portion 18 of the coupling body 10 causes the collet to grip the tube more tightly as the tube and collet are pulled outwardly.

At the end 29 of the body an end cover 30 comprises a cylindrical portion 31 having an inwardly extending lip 32 is provided. The end cover is formed of a resilient plastics material and the lip 32 can resiliently engage in an annular groove 33 in the coupling body. The lip 32 abuts against one side wall 34 of this groove which thereby performs a stop preventing axial movement of the cover towards the right as viewed in Figure 1. The cover may however be removed by pulling it to the left.

At the other end of the body 10 beyond the shoulder 14 against which the tube 11 abuts there is a plastics filter disc element 35 moulded integrally with the body and extending across the body. The filter disc element is formed with a plurality of small holes 36 for flow of the medium through the body. The holes 36 may be arranged in any suitable pattern or any other form of cut outs or apertures may be formed in the filter disc element. The filter disc element thus forms a filter or strainer for the medium flowing through the body.

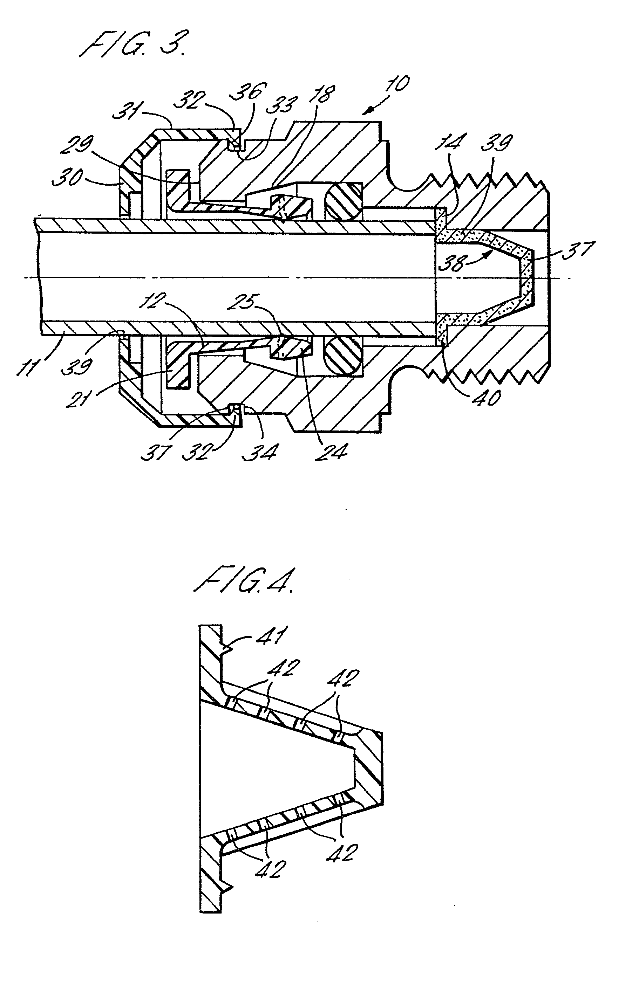

Figure 2 shows a similar form of coupling to that shown in Figure 1 with an alternative form of filter element comprising a cup-shaped element 37 lodged in the part of the body immediately downstream of the shoulder 14 with a base of the cup 38 facing towards the centre of the body. The cup shaped element has a peripheral rim 39 at its open end which is an interference fit in the bore in the body and the element is located with the edge of the rim substantially in line with the shoulder 14 to abut the end of the pipe 11 inserted in the coupling. In this case the filter element may be formed from a sintered metal, porous plastic or moulded plastic, wire mesh or in the form of a spring. The filter element is therefore removable from the body as distinct from the integral filter element construction shown in Figure 1.

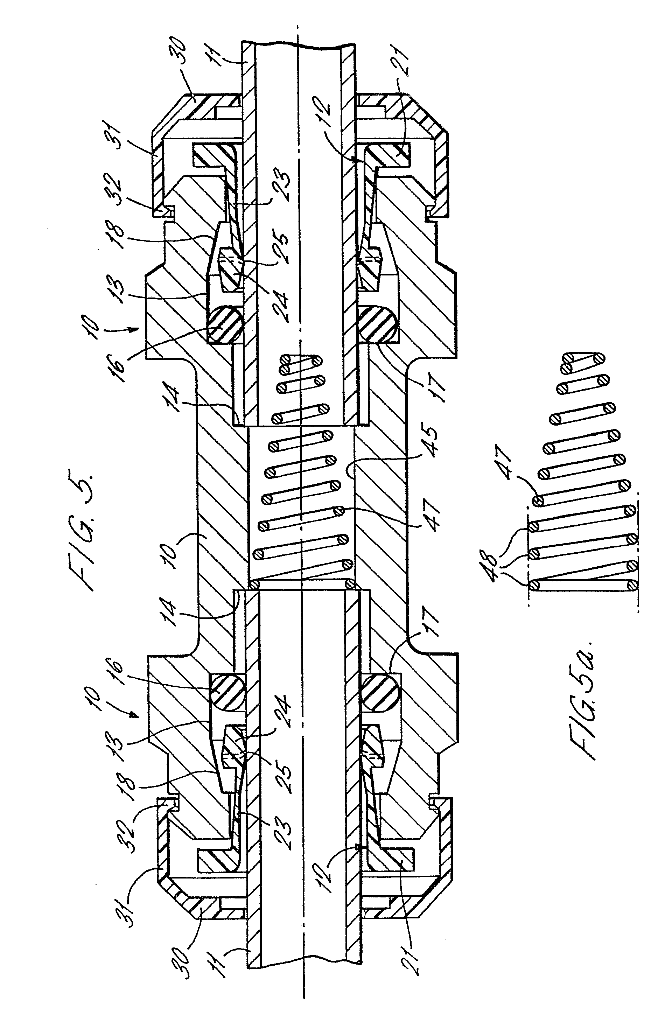

Figure 3 of the drawings shows a modified version of the arrangement shown in Figure 2 in which the rim 39 of the cup-shaped filter element has an out-turned peripheral flange 40 which is trapped between the end of the tube 11 and the shoulder 14 on the body 10 to hold the element in the pipe.

Figure 4 shows a modification of the arrangement in Figure 3 in which the flange 40 on the side to abut the shoulder 14 is formed with a raised rib 41 extending around the flange to permit the flange to be sonically welded to the body 11 after placing in position. The Figure 4 embodiment exemplifies a cup-shaped filter element formed from moulded plastics and provided with apertures 42 for flow of medium through the filter element in the side wall of the cup.

A further construction is shown in Figure 5 in which a double-ended body 10 having collet arrangements for receiving tubes 11 from either end is provided. The body 10 has a central narrow diameter portion 45 between the oppositely facing shoulders 14 for receiving tubes 11 from either end of the body in which a filter element in the form of a spiral spring 47 is fitted. The large diameter end of the spring is an interference fit in the bore 45 in the body and the spring may be formed with a number of parallel coils 48 at the large diameter end to fit the bore 45 as shown in the alternative form illustrated in Figure 5a. Alternatively or in addition the bore 45 may be formed with grooves in which the coil or coils at the large diameter end of the spring fit to retain the spring in position in the bore. The large diameter end of the spring is located adjacent one shoulder 14 and abuts the end of one tube 11 inserted into the body 10. The smaller diameter end of the spring may extend beyond the other shoulder into the other tube 11 as shown in Figure 5 or may stop short of the tube 11.

Although the invention has been described specifcially in relation to two particular forms of tube coupling, it will be understood that it is applicable to any form of tube coupling including, tees, elbows, straight adaptors, etc.

- 8 -

0146997

CLAIMS:

1. A tube coupling for gripping a tube comprising a body member (10) with a bore (13) to receive a tube and a releasable locking device (12) in the bore to permit a tube to be inserted into the bore in one direction from one end (29) of the body and to prevent withdrawal of the tube in the opposite direction until released and a filter element (35,37,40,47) disposed in the bore spaced from the locking device to filter a medium flowing in the bore.

2. A tube coupling as claimed in claim 1 wherein the filter comprises a wall (35) extending across the bore (13) having a passageway or passageways (36) through the wall for flow of medium through the bore.

3. A tube coupling as claimed in claim 2 wherein the wall (35) is formed integrally with the body member (10).

4. A tube coupling as claimed in claim 1 or claim 2 wherein the passageways (36) through the filter wall (35) comprise spaced holes extending through the wall.

5. A tube coupling as claimed in claim 1 or claim 2 wherein the filter element (37) is cup-shaped, the rim (39) of the cup being mounted around the bore (13) in the body member and the base (38) of the cup extending across the bore.

0146997

6. A tube coupling as claimed in claim 5 wherein the rim (39) of the cup is an interference fit in the bore (13) in the body member (10).

7. A tube coupling as claimed in claim 5 wherein the bore (13) has an annular step (14) spaced from the releasable clamping device (12) in the bore and facing towards said one end (29) of the body to receive an end of a tube to be mounted in the body and the filter (37) is formed with a flange (46) around its peripheral rim to engage the step and be retained by an end of a tube inserted in the body.

8. A tube coupling as claimed in any of the preceding claims wherein the filter is formed from a sintered metal, a porous plastics, an apertured plastics moulding, wire mesh or a spring.

9. A tube coupling as claimed in claim 8 and in the case where the filter is formed from a plastics material, wherein the body is also formed from a plastics material and the filter is welded to the body.

10. A tube coupling as claimed in claim 8 wherein the spring is a spiral spring (47).

11. A tube coupling as claimed in claim 10 wherein the bore (13) of the body (10) is formed with a groove or grooves to receive the outer turns of the spiral spring to support the spring (47) in the body.

12. A tube coupling as claimed in any of the preceding claims having special releasable clamping devices (12) to hold the tubular members inserted in the bore (13) in the body (10) from either end thereof and the filter (47) is disposed in the body between the clamping devices.

FIG. 1.

FIG. 2.

*FIG. 3.*

*FIG. 4.*

FIG. 5.

FIG. 5a.

3/3

0146997

European Patent Office

**EUROPEAN SEARCH REPORT**

**0146997**
Application number

EP 84 30 0007

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-2 446 256 (YOUNG)<br>* Figure 2 * | 1-7,12 | F 16 L 55/24 |
| A | US-A- 979 481 (HANNOLD)<br><br>* Figures 1-4 * | 1,4,7,<br>8,12 | |
| A | US-A-3 703 913 (CARSTEN)<br><br>* Figure 1 * | 8,10,<br>11 | |
| A | GB-A-1 491 703 (THOMSON)<br><br>* Figures 1, 2 * | 8,10,<br>11 | |
| A | FR-A-2 069 271 (DERMAN)<br>* Page 4, lines 4-8; figure 1 * | 8,9 | **TECHNICAL FIELDS SEARCHED (Int. Cl. ³)** |
| A | DE-B-2 316 453 (DANFOSS) | | F 16 L 55/00<br>F 16 L 37/00 |
| A | FR-A-1 533 681 (CSEPEL AUTOGYAR) | | |
| A | US-A-2 153 664 (FREEDLANDER) | | |
| A | US-A-2 059 017 (NICKLE)<br><br>---      -/- | | |

The present search report has been drawn up for all claims

| Place of search | Date of completion of the search | Examiner |
|---|---|---|
| BERLIN | 19-07-1984 | SCHLABBACH M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

**European Patent Office**

**EUROPEAN SEARCH REPORT**

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl. ³) |
| A | FR-A- 377 449 (HANNOLD) | | |

-----

TECHNICAL FIELDS SEARCHED (Int. Cl. ³)

The present search report has been drawn up for all claims

| Place of search | Date of completion of the search | Examiner |
|---|---|---|
| BERLIN | 19-07-1984 | SCHLABBACH M |